(19)

Europäisches Patentamt

European Patent Office

Office européen des brevets

(11) **EP 4 641 681 A1**

(12) **EUROPEAN PATENT APPLICATION**
published in accordance with Art. 153(4) EPC

(43) Date of publication:
**29.10.2025 Bulletin 2025/44**

(21) Application number: **22856990.1**

(22) Date of filing: **21.12.2022**

(51) International Patent Classification (IPC):
$H01M\ 4/38^{(2006.01)}$    $C22F\ 1/08^{(2006.01)}$
$H01M\ 4/66^{(2006.01)}$    $H01M\ 4/74^{(2006.01)}$
$H01M\ 10/0525^{(2010.01)}$    $H01M\ 4/02^{(2006.01)}$

(52) Cooperative Patent Classification (CPC):
**H01M 4/661; C22F 1/08; H01M 4/386; H01M 4/667; H01M 4/742;** H01M 10/0525; H01M 2004/021

(86) International application number:
**PCT/IB2022/062617**

(87) International publication number:
**WO 2024/134259 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Volta Energy Solutions S.à r.l.
2242 Luxembourg (LU)**

(72) Inventors:
• **MOON, Honggi
 9559 WILTZ (LU)**
• **STREEL, Michel
 9559 WILTZ (LU)**
• **DEVAHIF, Thomas
 9559 WILTZ (LU)**

(74) Representative: **Office Freylinger
 P.O. Box 48
 8001 Strassen (LU)**

(54) **METAL FOIL FOR CURRENT COLLECTOR, CURRENT COLLECTOR FOR SECONDARY BATTERY MANUFACTURED USING SAME, AND SECONDARY BATTERY COMPRISING SAME**

(57) The present invention relates to a metal foil for current collectors, a current collector for batteries, and a secondary battery including the same, the metal foil for current collectors including: a first cut portion including a plurality of first cutting lines spaced apart from each other in a first direction; and a second cut portion including a plurality of second cutting lines spaced apart from each other in the first direction, wherein the first cut portion and the second cut portion are each provided in plural, and are alternately disposed parallelly while being spaced apart from each other in a second direction perpendicular to the first direction, the plurality of first cutting lines and the plurality of second cutting lines are spaced apart from each other in a zigzag arrangement such that end portions of respective cutting lines overlap each other to have an overlap portion, and the metal foil satisfies predetermined relational expressions 1 and 2.

FIG. 1

EP 4 641 681 A1

**Description**

**TECHNICAL FIELD**

The present invention relates to a metal foil for current collectors, a current collector for batteries, and a secondary battery including the same, and more particularly, to a metal foil for current collectors capable of producing mesh-type current collectors with excellent bonding strength with anode active materials, a current collector for batteries, and a secondary battery including the same.

**DISCUSSION OF RELATED ART**

Lithium secondary batteries have many advantages such as relatively high energy density and operating voltage as well as excellent preservation and lifespan characteristics compared to other secondary batteries. Accordingly, it is widely used in various portable electronic devices such as personal computers, camcorders, portable phones, PDAs, tablet PCs, and electric vehicles.

In such a lithium secondary battery, an anode (e.g., a negative electrode) includes an anode current collector and an anode active material coated (attached) to a surface of the anode current collector. A copper foil is generally used as a material for the anode current collector, and in particular, an electrolytic copper foil is used. However, the electrolytic copper foil is manufactured by an electrolytic plating method, and respective roughness of opposite surfaces is different from each other. For this reason, when the electrolytic copper foil is applied as an anode current collector, a difference in an active material coating amount between opposite surfaces of the current collector may be caused, which may cause a decrease in capacity or unstable behavior of the electrode due to a difference in deformation between opposite surfaces.

In order to improve charge/discharge cycle characteristics of a lithium secondary battery, a silicon-based anode active material is used as an anode active material. However, the silicon-based anode active material has a significant volume change of about 300% or more during charging and discharging of the lithium secondary battery. Accordingly, the anode active material may peel off or be separated from the anode current collector to cause an internal short circuit, which reduces the lifespan of the electrode as well as the battery efficiency.

**TECHNICAL OBJECTIVES**

The present invention is directed to providing a metal foil capable of economically and eco-friendlily manufacturing a current collector for batteries having excellent bonding strength with an active material.

The present invention is further directed to providing a current collector for batteries that is manufactured using the above-described metal foil to have excellent bonding strength with an active material.

The present invention is further directed to providing a current collector for batteries that has little effect on battery characteristics even when the metal foil is made in a mesh form and amounts of active material applied on opposite surfaces are slightly different from each other.

The present invention is further directed to providing an electrode for secondary batteries using the above-described current collector and a secondary battery including the same.

**TECHNICAL SOLUTION TO THE PROBLEM**

In order to achieve the above technical objectives, the present invention provides a metal foil for current collectors, including: a first cut portion including a plurality of first cutting lines spaced apart from each other in a first direction; and a second cut portion including a plurality of second cutting lines spaced apart from each other in the first direction, wherein the first cut portion and the second cut portion are each provided in plural, and are alternately disposed parallelly while being spaced apart from each other in a second direction perpendicular to the first direction, the plurality of first cutting lines and the plurality of second cutting lines are spaced apart from each other in a zigzag arrangement such that end portions of respective cutting lines overlap each other to have an overlap portion, and the metal foil satisfies the following Relational Expressions 1 and 2:

[Relational Expression 1]

$$0.75 \leq \frac{D_1}{T_1} \leq 2.5$$

[Relational Expression 2]

$$1 \leq \frac{L_1}{T_1} \leq 6$$

(wherein in the above expressions,

$T_1$ is a thickness of the metal foil,
$D_1$ is a distance between the first cut portion and the second cut portion adjacent to each other, and
$L_1$ is a length of the overlap portion).

According to an example of the present invention, a ratio of a roughness Rz of a matte surface of the metal foil to a thickness $T_1$ of the metal foil may be in a range from 0.1 to 0.5.

According to an example of the present invention, a metal foil in which the first cut portion and the second cut portion are not formed may have a tensile strength in a range from 30 to 90 kgf/mm$^2$ and an elongation in a range from 2 to 25%.

According to an example of the present invention, the metal foil for current collectors may have a thickness in a range from 6 to 30 $\mu$m.

According to an example of the present invention, a metal of the metal foil may be selected from: copper (Cu), aluminum (Al), nickel (Ni), iron (Fe), silver (Ag), gold (Au), tungsten (W), tin (Sn), platinum (Pt), palladium (Pd) and alloys thereof.

In addition, the present invention provides a current collector for batteries, including: a metal mesh layer formed by spreading and press-processing the metal foil according to any one of claims 1 to 5, and including a wire rod portion and a rhombic opening, wherein the wire rod portion satisfies the following Relational Expressions 3 and 4:

[Relational Expression 3]

$$0.75 \leq \frac{W_1}{T_1} \leq 2.5$$

[Relational Expression 4]

$$1 \leq \frac{P_1}{T_1} \leq 10$$

(in the above expressions,

$T_1$ is a thickness of the metal mesh layer,
$W_1$ is a line width of the wire rod portion,
$P_1$ is a line spacing of the wire rod portion).

According to an example of the present invention, an opening ratio may be in a range from 10 to 300%.

According to an example of the present invention, the current collector for batteries may further include a surface treatment layer disposed on at least one surface of the metal mesh layer.

In addition, the present invention provides an electrode for secondary batteries, including: the current collector; and active material layers disposed on opposite surfaces of the current collector.

According to an example of the present invention, the electrode for secondary batteries may further include a surface treatment layer disposed on at least one surface of the metal mesh layer.

According to an example of the present invention, the active material layer may include a silicon-based active material.

In addition, the present invention provides a secondary battery including the electrode.

**EFFECTS OF THE INVENTION**

The metal foil according to the present invention may manufacture a mesh-type current collector having excellent bonding strength with active materials, thus being economical and eco-friendly, by disposing a plurality of cutting lines spaced apart from each other in a zigzag arrangement and adjusting a distance between the cutting lines within a specific range.

**BRIEF DESCRIPTION OF THE DRAWING PORTIONS**

FIG. 1 is a plan view schematically illustrating a metal foil for current collectors according to a first embodiment of the present invention.
FIG. 2 is a plan view schematically illustrating a current collector for batteries according to a second embodiment of the present invention.
FIG. 3 is a cross-sectional view schematically illustrating a state in which peeling of an active material of Experimental Example 1 is measured.

** Reference numerals **

10: first cut portion,
11: first cutting line,
20: second cut portion
21: second cutting line
100: metal foil
100A: metal mesh layer

**DETAILED DESCRIPTION OF THE INVENTION**

Hereinafter, the present invention will be described in detail.
All terms (including technical and scientific terms) used in this specification may be used in the meaning commonly understood by those of ordinary skill in the art to which the present invention pertains, unless otherwise defined. Terms defined in a commonly used dictionary are not to be interpreted ideally or excessively, unless clearly defined in particular.
In addition, throughout this specification, when a part "includes" or "comprises" a certain element, it is to be understood as an open-ended term that includes the possibility of further including other elements rather than excluding other elements, unless otherwise stated. In addition, throughout the specification, "on" or "above" means not only when it is located on or beneath a target part, but also includes the case where there is another part therebetween, and does not mean that it is located upwardly with respect to the direction of gravity. In the present specification, terms such as "first" and "second" do not indicate any order or importance but are used to distinguish components from each other.
As used herein, "preferred" and "preferably" refer to embodiments of the present invention that may provide certain advantages under certain circumstances. However, other embodiments may also be preferred, under the same or different circumstances. Additionally, the recitation of one or more preferred embodiments does not imply that other embodiments are not useful, nor is it intended to exclude other embodiments from the scope of the invention.

<Metal Foil for Current Collector>

**In** general, as a thickness of a metal foil (e.g., a copper foil) decreases, an elongation (e.g., an elongation rate) decreases. When such a thin metal foil is applied as an anode current collector of a battery, high-capacity characteristics of the battery may be achieved by increasing a loading amount of the active material. However, when a volume of the active material changes during charging and discharging of the secondary battery, the thin metal foil has a low elongation and is easily torn, resulting in degradation in performance and safety of the battery. **In** addition, since the metal foil is in the form of a plate, when the active material is coated on opposite sides of the metal foil, at least two coating processes should be performed, which increases the manufacturing time and cost of the current collector.
In order to solve such problems, in the present invention, it was found that when a mesh-type metal foil, instead of a plate-type metal foil, is applied as a current collector, a bonding strength between the metal foil and the active material may be increased, and in addition, the active material may be coated on opposite surfaces of the current collector through a single coating process. However, when a plurality of openings are formed in a plate-shaped metal foil through etching, punching, or laser processing, the loss of the metal plate is too large. In addition, when chemical processing such as etching processing is used, environmental pollution is caused due to etching waste liquid.

Accordingly, in the present invention, a mesh-type current collector may be manufactured without environmental pollution and loss of the metal plate by forming a zigzag arrangement of cutting lines (e.g., cuts, cutouts, etc.) in the plate-shaped metal foil, followed by spreading (e.g., unfolding) and pressing.

However, the present invention found that the spreading of the metal foil having the plurality of cutting lines varies depending on a distance between adjacent cutting lines, a length of an overlap portion of opposite end portions of the cutting lines, and a ratio between these and a thickness of the metal foil, thus affecting easiness of manufacturing of the mesh-type current collector, as well as a binding force with the active material coated on the current collector as an opening ratio of the mesh-type current collector is changed. In addition, the present invention found that the distance between adjacent cutting lines and the length of the overlap portion compared to the thickness of the metal foil also affect a tensile strength and an elongation of the mesh-type current collector.

Accordingly, the metal foil for current collectors according to the present invention includes the plurality of cutting lines spaced apart from each other in a zigzag arrangement, while a distance between adjacent cutting lines and a length of a portion where an end of each cutting line overlap each other are each adjusted within a specific range with respect to a thickness of the metal foil. Accordingly, the metal foil for current collectors according to the present invention may economically and eco-friendlily manufacture a mesh-type current collector through spreading and press processing. The mesh-type current collector of the present invention manufactured as described above may coat the active material on opposite surfaces through a single coating process, and may withstand volume changes of the active material due to excellent bonding strength with the active material.

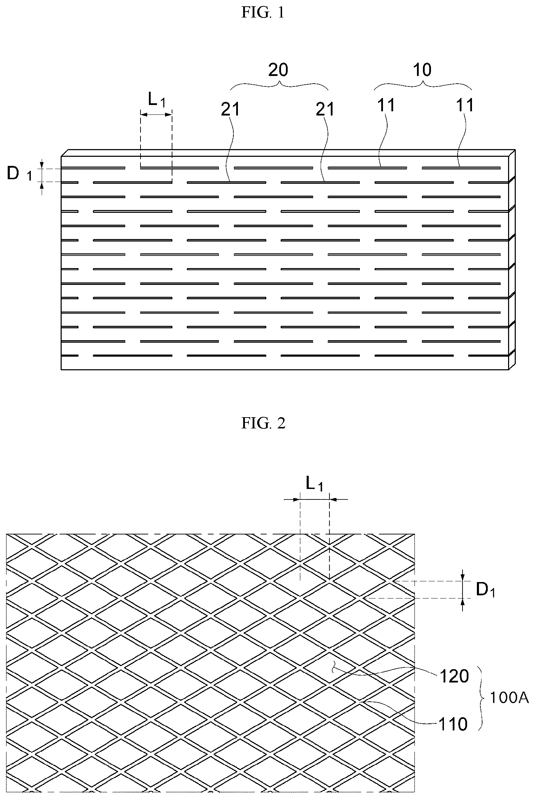

Hereinafter, the metal foil for current collectors according to a first embodiment of the present invention will be described in detail with reference to FIG. 1.

As illustrated in FIG. 1, the metal foil for current collectors according to the first embodiment of the present invention includes a first cut portion 10 including a plurality of first cutting lines 11 spaced apart from each other in a first direction (e.g., a longitudinal direction of the metal foil); and a second cut portion 20 including a plurality of second cutting lines 21 spaced apart from each other in the first direction (e.g., the longitudinal direction of the metal foil).

The first cut portion 10 and the second cut portion 20 are each provided in plural, and are alternately disposed parallelly while being spaced apart from each other in a second direction (e.g., a width direction of the metal foil) perpendicular to the first direction.

In such a case, the plurality of first cutting lines 11 and the plurality of second cutting lines 21 are spaced apart from each other in a zigzag arrangement so that end portions of respective cutting lines overlap each other to have an overlap portion.

However, the metal foil for current collectors according to the present invention should satisfy the following Relational Expressions 1 and 2:

[Relational Expression 1]

$$0.75 \leq \frac{D_1}{T_1} \leq 2.5$$

[Relational Expression 2]

$$1 \leq \frac{L_1}{T_1} \leq 6$$

(where in the above expressions,

$T_1$ is a thickness of the metal foil,
$D_1$ is a distance between the first cut portion and the second cut portion adjacent to each other, and
$L_1$ is a length of the overlap portion).

If the metal foil for current collectors of the present invention does not satisfy the Relational Expressions 1 and 2, it may be difficult to manufacture a mesh-type current collector, disconnection may occur, and the bonding force with the active material may be low, so that the active material may peel off and be separated during charging and discharging of the secondary battery.

The thickness ($T_1$) of the metal foil for current collectors according to the present invention is not particularly limited, but if the thickness of the metal foil is too thin, handling of the metal foil in the battery manufacturing process may become difficult and workability may be degraded, and current collecting effects of the manufactured mesh-type current collector may be insufficient. On the other hand, if the thickness of the metal foil is too thick, a thickness of the manufactured mesh-type current collector may be also thick and a volume and a weight may increase, which makes it difficult to manufacture a high-capacity battery, and processability may be degraded in the case of assembling cells by folding. Accordingly, it is appropriate that the thickness of the metal foil is in a range from about 6 to 30 $\mu$m.

In the metal foil for current collectors according to the present invention, the distance $D_1$ between the first cut portion 10 and the second cut portion 20 adjacent to each other may be in a range from about 75 to 250% with respect to the thickness of the metal foil described above. For example, when the thickness of the metal foil is in a range from about 6 to 30 $\mu$m, the distance $D_1$ between the first cut portion 10 and the second cut portion 20 adjacent to each other may be in a range from about 4.5 to 75 $\mu$m.

In addition, in the metal foil for current collectors according to the present invention, a length of the first cutting line 11 and the second cutting line 21 is not particularly limited. However, a length of an end portion where the first cutting line 11 and the second cutting line 21 adjacent to each other overlap each other, that is, the length $L_1$ of the overlap portions 11a and 21a, may be longer than the distance $D_1$ between the first cut portion 10 and the second cut portion 20 adjacent to each other, and specifically, it is preferable to be adjusted in a range from about 100 to 600% with respect to the thickness of the metal foil described above. For example, when the thickness of the metal foil is in a range from about 6 to 30 $\mu$m, the length $L_1$ of the overlap portions 11a and 21a may be in a range from about 6 to 180 $\mu$m.

The metal foil 100 according to the present invention is an electrolytic metal foil manufactured through a film forming process by an electroplating method, and specifically, one surface of the metal foil 100 has a shiny surface (e.g., an "S surface," a drum surface, etc.) which has a relatively low roughness and thus has a high gloss, and another surface of the metal foil has a matte surface (e.g., an "M surface", an electrolyte surface, etc.) which has a relatively high roughness due to so-called mountain structures and thus has a low gloss.

Depending on the roughness of the matte surface of the metal foil 100, a bonding strength with the active material or processability may vary. In particular, when the roughness of the matte surface of the metal foil 100 compared to the thickness of the metal foil 100 exceeds about 0.5, disconnection may occur during processing. Accordingly, a ratio ($Rz/T_1$) of the roughness ($Rz$) of the matte surface of the metal foil to the thickness ($T_1$) of the metal foil of the present invention is preferably in a range from about 0.1 to 0.5.

In such a case, a tensile strength of the metal foil in which the first and second cut portions are not formed is about 30 kgf/mm$^2$ or more and up to 90 kgf/mm$^2$, and specifically in a range from about 30 to 90 kgf/mm$^2$, and an elongation may be in a range from 2 to 25%.

A metal of the metal foil according to the present invention is not particularly limited as long as it has high conductivity without causing chemical change to the battery, and may be, for example, copper (Cu), aluminum (Al), nickel (Ni), iron (Fe), silver (Ag), gold (Au), tungsten (W), tin (Sn), platinum (Pt), palladium (Pd), and alloys thereof In an example, the metal of the metal foil may be copper (Cu), and the metal foil may be a copper foil, and specifically an electrolytic copper foil.

<Current Collector for Battery>

The present invention provides a current collector for batteries manufactured using the above-described metal foil.

Referring to FIG. 2, the current collector for batteries according to the present invention which is formed by spreading and press-processing the above-described metal foil 100 includes a metal mesh layer 100A having a two-dimensional network structure including a wire rod portion 110 and a plurality of rhombic openings (120).

In such a case, the wire rod portion 110 satisfies the following Relational Expressions 3 and 4.

[Relational Expression 3]

$$0.75 \leq \frac{W_1}{T_1} \leq 2.5$$

[Relational Expression 4]

$$1 \leq \frac{P_1}{T_1} \leq 10$$

In the above expressions,

$T_1$ is a thickness of the metal mesh layer, and may be, for example, in a range from about 6 to 30 $\mu$m,

$W_1$ is a line width of the wire rod portion, and may be, for example, in a range from about 6 to 45 $\mu$m, and

$P_1$ is a line spacing of the wire rod portion, that is, a size of the opening, and may be, for example, in a range from 6 to 45 $\mu$m.

In addition, a shape of the opening 120 is a rhombus, so it may withstand a volume change of the active material better than other shapes (e.g., circular shape). This is because, when the opening is in the shape of a rhombus, it may move more easily in a longitudinal direction and/or in a width direction than in the case of other shapes (e.g., circular shape).

The opening ratio of the current collector for batteries which is an area ratio occupied by the opening 120 with respect to 100% of the total area of the current collector may be in a range from about 10 to 300%. Accordingly, even if the silicon-based active material is disposed in the current collector of the present invention, it may continuously withstand the volume change of the silicon-based active material.

Although not illustrated, the current collector for batteries according to the present invention may further include an anti-corrosion layer disposed on at least one surface of the metal mesh layer 100A.

The surface treatment layer may be for preventing corrosion of the metal mesh layer 100A, or for enhancing adhesion, or for reducing contact resistance.

In an example, the surface treatment layer may be formed by sputtering, electroplating, or electroless plating any one of metals such as copper (Cu), chromium (Cr), molybdenum (Mo), nickel (Ni), tin (Sn), zinc (Zn), cobalt (Co) and silver (Ag) or an alloy thereof on the metal mesh layer 100A.

In another example, the surface treatment layer may be formed by chromating the metal mesh layer 100A using an aqueous solution including hexavalent chromium ions.

In another example, the surface treatment layer may be formed by coating at least one of a silane compound, a nitrogen compound, graphene, carbon nanotubes, and a conductive polymer on the metal mesh layer 100A.

In such a case, any silane compound known in the art is not particularly limited, and may be, for example, epoxy functional silanes such as 3-glycidoxypropyl trimethoxysilane and 2-(3,4-epoxycyclohexyl)ethyltrimethoxysilane; amino functional silanes such as 3-aminopropyl trimethoxysilane, N-2-(aminoethyl)3-aminopropyl trimethoxysilane, and N-2-(aminoethyl)3-aminopropylmethyl dimethoxysilane; olefin functional silanes such as vinyltrimethoxysilane, vinylphenyltrimethoxysilane, and vinyltris(2-methoxyethoxy)silane; acrylic functional silanes such as 3-acryloxypropyl trimethoxysilane; methacrylic functional silanes such as 3-methacryloxypropyl trimethoxysilane; mercapto functional silanes such as 3-mercaptopropyl trimethoxysilane, and the like.

The nitrogen compound may include at least one or more of conventional triazole compounds and amine compounds known in the art. Examples of the triazole compounds may include benzotriazole, toryltriazole, carboxybenzotriazole, chlorobenzotriazole, ethylbenzotriazole, naphthotriazole, and the like, and examples of the amine compounds may include amide, acrylamide, acetamide, auramine, dodecyltrimethyl ammonium bromide (DTAB), diethylenetriamine (DETA), and the like.

In addition, the conductive polymer is not particularly limited, and examples thereof may include polyacetylene, polyaniline (PANI), polyphenylene, polypyrene, polypyrrole, poly(phenylene vinylene), polythiophene, poly(3,4-ethylenedioxythiophene) (PEDOT), poly(p-phenylene sulfide) (PPS), and the like.

<Electrode>

The present invention provides an electrode for secondary batteries, specifically an anode for secondary batteries, including the above-described current collector.

In an example, an electrode (specifically, an anode) for secondary batteries according to the present invention includes the aforementioned current collector; and electrode active material layers (specifically, anode active material layers) disposed on opposite surfaces of the current collector, and optionally, the current collector may further include a surface treatment layer disposed on at least one surface of the metal mesh layer.

Since the description of the current collector is the same as described above, it will be omitted.

The anode active material layer includes an anode active material and may further include a conventional binder and/or a conductive material known in the art.

The anode active material is not particularly limited as long as it is a compound capable of intercalation and deintercalation of ions. Non-limiting examples of applicable anode active materials may include carbon-based and silicon-based anode active materials, and in addition, lithium metal or alloys thereof, and other lithium may be occluded and released, and metal oxides such as $TiO_2$, $SnO_2$ and $Li_4Ti_5O_{12}$ having a potential of less than 2V for lithium may be used.

Since a method of manufacturing an anode for secondary batteries using the above-described current collector is apparent to those skilled in the art to which the present invention belongs, a detailed description thereof will be omitted.

\<Secondary Battery\>

The present invention provides a secondary battery including the anode described above.

The secondary battery may be a lithium secondary battery, and may specifically include a lithium metal secondary battery, a lithium ion secondary battery, a lithium polymer secondary battery, a lithium ion polymer secondary battery, and the like.

In an example, the lithium secondary battery includes a cathode (e.g., a positive electrode) including a cathode active material; an anode including an anode active material; and an electrolyte supported between the cathode and the anode. In addition, a separator may be further included.

The lithium secondary battery of the present invention may be manufactured according to a conventional method known in the art, and it may be manufactured by, for example, interposing a separator between the cathode and the anode and then introducing an electrolyte to which an electrolyte additive is added.

Here, the cathode is not particularly limited, and any cathode generally known in the art may be used.

In addition, the electrolyte may be configured including a conventional lithium salt known in the art; and an electrolyte solvent.

In addition, a porous separator may be used as the separator, and for example, a polypropylene-based, polyethylene-based, or polyolefin-based porous separator, or an organic/inorganic composite separator including an inorganic material may be used.

Hereinafter, the present invention will be described in detail through examples. However, the following examples are only to illustrate the present invention, and the present invention is not limited by the following examples.

[Examples 1 to 21 and Comparative Examples 1 to 54]

A copper foil (thickness: 20 $\mu$m) was cut with cutouts in a zigzag arrangement to form a plurality of cutting lines. In such a case, a distance ($D_1$) between adjacent cutting lines and a length ($L_1$) of an overlap portion between end portions of respective cutting lines were adjusted so that a line width and a line spacing of a wire rod portion in the current collector were as shown in Tables 1 and 2 below.

Then, the copper foil having the plurality of cutting lines was spread by applying a force of 1 kgf/cm in a width direction to form a wire rod portion and a plurality of rhombic openings, and then pressed by a roller press (pressure: about 10 kgf/mm$^2$), and accordingly, a current collector for batteries of Examples 1 to 21 and Comparative Examples 1 to 54 were manufactured.

[Experimental Example 1]

The following evaluation was performed to check whether a mesh-type current collector was manufactured according to the distance between adjacent cutting lines (e.g., the line width of the wire rod portion) $D_1$ and the length of the overlap portion between end portions of respective cutting lines (e.g., the line spacing of the wire rod portion) $L_1$ compared to the thickness of the copper foil, and whether peeling off (separation) of the active material occurred, and the results are each shown in Tables 1 and 2.

(1) Sample preparation

Each sample was prepared by coating opposite surfaces of the current collectors for batteries of Examples (Ex.) 1 to 21 and Comparative Examples (Comp. Ex.) 1 to 54 with an anode active material to a thickness of 100 $\mu$m. In such a case, the anode active material was manufactured by mixing artificial graphite, styrene butadiene rubber (SBR), and carboxymethyl cellulose (CMC) with pure water at a weight ratio of 96 : 2 : 2.

(2) Separation of active material

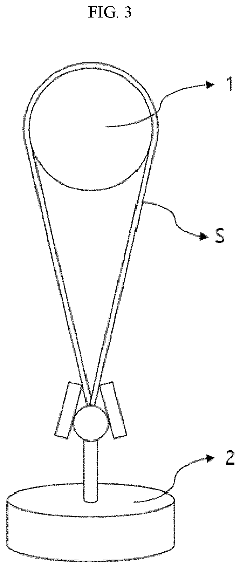

As illustrated in FIG. 3, after mounting a sample S on a metal bar (diameter: 10 mm) 1, a weight 2 of 1 kg was hung at a lower end of the sample S for about 1 minute, and then it was observed whether or not the active material peeled off from the current collector. In such a case, if the active material did not peel off, it was recorded "No," and if the active material peeled off, it was recorded "separated."

(3) Disconnection

After manufacturing a battery using each sample, occurrence of disconnection in the battery was observed with the naked eye and a 50x microscope.

[Table 1]

| | Copper foil thickness ($\mu m$) | Line width ($\mu m$) | Line spacing ($\mu m$) | Coating thickness ($\mu m$) | Coating amount to copper foil (%) | Active material separation | Line spacing/Copper foil thickness | Line width/Copper foil thickness | Issues in manufacturing |
|---|---|---|---|---|---|---|---|---|---|
| Comp. Ex. 1 | 20 | 10 | 10 | 100 | 137 | No | 0.50 | 0.5 | Disconnected |
| Comp. Ex. 2 | 20 | 10 | 15 | 100 | 162 | No | 0.75 | 0.5 | Disconnected |
| Comp. Ex. 3 | 20 | 10 | 20 | 100 | 188 | No | 1.0 | 0.5 | Disconnected |
| Comp. Ex. 4 | 20 | 10 | 40 | 100 | 296 | No | 2 | 0.5 | Disconnected |
| Comp. Ex. 5 | 20 | 10 | 80 | 100 | 514 | No | 4 | 0.5 | Disconnected |
| Comp. Ex. 6 | 20 | 10 | 160 | 100 | 953 | No | 8 | 0.5 | Disconnected |
| Comp. Ex. 7 | 20 | 10 | 320 | 100 | 1,833 | No | 16 | 0.5 | Disconnected |
| Comp. Ex. 8 | 20 | 10 | 500 | 100 | 2,823 | Separated | 25 | 0.5 | Disconnected |
| Comp. Ex. 9 | 20 | 10 | 1000 | 100 | 5,573 | Separated | 50 | 0.5 | Disconnected |
| Comp. Ex. 10 | 20 | 10 | 2000 | 100 | 11,073 | Separated | 100 | 0.5 | Disconnected |
| Comp. Ex. 11 | 20 | 15 | 10 | - | - | - | 0.50 | 0.75 | Unable to manufacture |
| Comp. Ex. 12 | 20 | 15 | 15 | - | - | - | 0.75 | 0.75 | Unable to manufacture |
| Ex. 1 | 20 | 15 | 20 | 100 | 153 | No | 1.0 | 0.75 | None |
| Ex. 2 | 20 | 15 | 40 | 100 | 224 | No | 2.0 | 0.75 | None |
| Ex. 3 | 20 | 15 | 80 | 100 | 368 | No | 4.0 | 0.75 | None |
| Ex. 4 | 20 | 15 | 160 | 100 | 660 | No | 8.0 | 0.75 | None |
| Comp. Ex. 13 | 20 | 15 | 320 | 100 | 1,246 | No | 16 | 0.75 | Disconnected |
| Comp. Ex. 14 | 20 | 15 | 500 | 100 | 1,906 | Separated | 25 | 0.75 | Disconnected |
| Comp. Ex. 15 | 20 | 15 | 1000 | 100 | 3,739 | Separated | 50 | 0.75 | Disconnected |
| Comp. Ex. 16 | 20 | 15 | 2000 | 100 | 7,406 | Separated | 100 | 0.75 | Disconnected |
| Comp. Ex. 17 | 20 | 20 | 10 | - | - | - | 0.50 | 1.0 | Unable to manufacture |
| Comp. Ex. 18 | 20 | 20 | 15 | - | - | - | 0.75 | 1.0 | Unable to manufacture |
| Ex. 5 | 20 | 20 | 20 | 100 | 137 | No | 1.0 | 1.0 | None |
| Ex. 6 | 20 | 20 | 40 | 100 | 188 | No | 2 | 1.0 | None |

(continued)

| | Copper foil thickness ($\mu m$) | Line width ($\mu m$) | Line spacing ($\mu m$) | Coating thickness ($\mu m$) | Coating amount to copper foil (%) | Active material separation | Line spacing/Copper foil thickness | Line width/Copper foil thickness | Issues in manufacturing |
|---|---|---|---|---|---|---|---|---|---|
| Ex. 7 | 20 | 20 | 80 | 100 | 296 | No | 4 | 1.0 | None |
| Ex. 8 | 20 | 20 | 160 | 100 | 514 | No | 8 | 1.0 | None |
| Comp. Ex. 19 | 20 | 20 | 320 | 100 | 953 | No | 16 | 1.0 | Disconnected |
| Comp. Ex. 20 | 20 | 20 | 500 | 100 | 1,448 | Separated | 25 | 1.0 | Disconnected |
| Comp. Ex. 21 | 20 | 20 | 1000 | 100 | 2,823 | Separated | 50 | 1.0 | Disconnected |
| Comp. Ex. 22 | 20 | 20 | 2000 | 100 | 5,573 | Separated | 100 | 1.0 | Disconnected |
| Comp. Ex. 23 | 20 | 25 | 10 | - | - | - | 0.5 | 1.3 | Unable to manufacture |
| Comp. Ex. 24 | 20 | 25 | 15 | - | - | - | 0.8 | 1.3 | Unable to manufacture |
| Ex. 9 | 20 | 25 | 20 | 100 | 127 | No | 1.0 | 1.3 | None |
| Ex. 10 | 20 | 25 | 25 | 100 | 137 | No | 1.3 | 1.3 | None |
| Ex. 11 | 20 | 25 | 50 | 100 | 188 | No | 3 | 1.3 | None |
| Ex. 12 | 20 | 25 | 100 | 100 | 296 | No | 5 | 1.3 | None |
| Ex. 13 | 20 | 25 | 200 | 100 | 514 | No | 10 | 1.3 | None |

[Table 2]

| | Copper foil thickness (μm) | Line width (μm) | Line spacing (μm) | Coating thickness (μm) | Coating amount to copper foil (%) | Active material separation | Line spacing/Copper foil thickness | Line width/Copper foil thickness | Issues in manufacturing |
|---|---|---|---|---|---|---|---|---|---|
| Comp. Ex. 25 | 20 | 25 | 400 | 100 | 953 | No | 20 | 1.3 | Disconnected |
| Comp. Ex. 26 | 20 | 25 | 800 | 100 | 1,833 | Separated | 40 | 1.3 | Disconnected |
| Comp. Ex. 27 | 20 | 25 | 1600 | 100 | 3,593 | Separated | 80 | 1.3 | Disconnected |
| Comp. Ex. 28 | 20 | 25 | 3000 | 100 | 6,673 | Separated | 150 | 1.3 | Disconnected |
| Comp. Ex. 29 | 20 | 30 | 10 | - | - | - | 0.5 | 1.5 | Unable to manufacture |
| Comp. Ex. 30 | 20 | 30 | 15 | - | - | - | 0.8 | 1.5 | Unable to manufacture |
| Ex. 14 | 20 | 30 | 20 | 100 | 121 | No | 1.0 | 1.5 | None |
| Ex. 15 | 20 | 30 | 30 | 100 | 137 | No | 1.5 | 1.5 | None |
| Ex. 16 | 20 | 30 | 60 | 100 | 188 | No | 3 | 1.5 | None |
| Ex. 17 | 20 | 30 | 120 | 100 | 296 | No | 6 | 1.5 | None |
| Comp. Ex. 31 | 20 | 30 | 240 | 100 | 514 | No | 12 | 1.5 | Disconnected |
| Comp. Ex. 32 | 20 | 30 | 500 | 100 | 990 | No | 25 | 1.5 | Disconnected |
| Comp. Ex. 33 | 20 | 30 | 1000 | 100 | 1,906 | Separated | 50 | 1.5 | Disconnected |
| Comp. Ex. 34 | 20 | 30 | 2000 | 100 | 3,739 | Separated | 100 | 1.5 | Disconnected |
| Comp. Ex. 35 | 20 | 30 | 4000 | 100 | 7,406 | Separated | 200 | 1.5 | Disconnected |
| Comp. Ex. 36 | 20 | 50 | 10 | - | - | - | 0.5 | 2.5 | Unable to manufacture |
| Comp. Ex. 37 | 20 | 50 | 15 | - | - | - | 0.8 | 2.5 | Unable to manufacture |
| Ex. 18 | 20 | 50 | 20 | 100 | 110 | No | 1.0 | 2.5 | None |
| Ex. 19 | 20 | 50 | 50 | 100 | 137 | No | 3 | 2.5 | None |
| Ex. 20 | 20 | 50 | 100 | 100 | 188 | No | 5 | 2.5 | None |
| Ex. 21 | 20 | 50 | 200 | 100 | 296 | No | 10 | 2.5 | None |
| Comp. Ex. 38 | 20 | 50 | 400 | 100 | 514 | No | 20 | 2.5 | Disconnected |
| Comp. Ex. 39 | 20 | 50 | 800 | 100 | 953 | Separated | 40 | 2.5 | Disconnected |
| Comp. Ex. 40 | 20 | 50 | 1600 | 100 | 1,833 | Separated | 80 | 2.5 | Disconnected |

(continued)

| | Copper foil thickness ($\mu$m) | Line width ($\mu$m) | Line spacing ($\mu$m) | Coating thickness ($\mu$m) | Coating amount to copper foil (%) | Active material separation | Line spacing/Copper foil thickness | Line width/Copper foil thickness | Issues in manufacturing |
|---|---|---|---|---|---|---|---|---|---|
| Comp. Ex. 41 | 20 | 50 | 3200 | 100 | 3,593 | Separated | 160 | 2.5 | Disconnected |
| Comp. Ex. 42 | 20 | 50 | 5000 | 100 | 5,573 | Separated | 250 | 2.5 | Disconnected |
| Comp. Ex. 43 | 20 | 100 | 10 | - | - | - | 0.5 | 5.0 | Unable to manufacture |
| Comp. Ex. 44 | 20 | 100 | 15 | - | - | - | 0.8 | 5.0 | Unable to manufacture |
| Comp. Ex. 45 | 20 | 100 | 20 | - | - | - | 1.0 | 5.0 | Unable to manufacture |
| Comp. Ex. 46 | 20 | 100 | 50 | - | - | - | 2.5 | 5.0 | Unable to manufacture |
| Comp. Ex. 47 | 20 | 100 | 100 | - | - | - | 5.0 | 5.0 | Unable to manufacture |
| Comp. Ex. 48 | 20 | 100 | 200 | - | - | - | 10.0 | 5.0 | Unable to manufacture |
| Comp. Ex. 49 | 20 | 100 | 400 | 100 | 296 | No | 20 | 5.0 | Disconnected |
| Comp. Ex. 50 | 20 | 100 | 800 | 100 | 514 | No | 40 | 5.0 | Disconnected |
| Comp. Ex. 51 | 20 | 100 | 1600 | 100 | 953 | Separated | 80 | 5.0 | Disconnected |
| Comp. Ex. 52 | 20 | 100 | 3200 | 100 | 1,833 | Separated | 160 | 5.0 | Disconnected |
| Comp. Ex. 53 | 20 | 100 | 5000 | 100 | 2,823 | Separated | 250 | 5.0 | Disconnected |
| Comp. Ex. 54 | 20 | 100 | 10000 | 100 | 5,573 | Separated | 500 | 5.0 | Disconnected |

[Experimental Example 2: Evaluation of Physical Properties of Metal Foil]

The physical properties of Samples 1A to 2C and Comparative Samples 1A to 2C were evaluated in the following manner in order to check a change in physical properties of the metal foil for current collectors of the present invention according to a thickness of the metal foil, a roughness of a matte surface of the metal foil, and a change in their ratio, and the results are shown in Table 3 below.

(1) Sample preparation

Samples 1A to 2C and Comparative Samples 1A to 2C were each manufactured in the same manner as in Example 1, using the copper foil used in Example 1, except that a thickness of the copper foil and a roughness of a matte surface were adjusted as shown in Table 3 below.

(2) Thickness

A thickness of the metal foil was measured by the unit basis weight method (IPC-TM-650 2.2.12).

(3) Surface Roughness

A roughness of the M surface of the metal foil was measured based on Rz using a shape measuring instrument (MarSurf, model name: M 300 C Mobile roughness measuring instrument) (IPC-TM-650 2.2.17).

(4) Elongation and Tensile Strength

A tensile strength (MPa) and an elongation (%) of the metal foil were measured according to the IPC-TM-650 2.4.18 standard using UTM (Instron, model name: 5942).

(5) Processability

In manufacturing the metal foil for current collectors, it was visually checked whether a cutout was made in a rhombic shape when a force of about 1 kgf/cm$^2$ was applied to the copper foil.

[Table 3]

| | Thickness ($\mu$m) | M surface roughness (Rz, $\mu$m) | Routhness to thickness | Tensile strength (kgf/mm$^2$) | Elongation (%) | Processability |
|---|---|---|---|---|---|---|
| Sample 1A | 10 | 1.78 | 0.18 | 31.5 | 7.5 | Good |
| Sample 1B | 20 | 1.52 | 0.08 | 31.1 | 14.5 | Good |
| Sample 1C | 30 | 1.33 | 0.04 | 30.5 | 20.5 | Good |
| Sample 2A | 10 | 1.65 | 0.17 | 54.5 | 3.5 | Good |
| Sample 2B | 20 | 2.12 | 0.11 | 53.8 | 5.3 | Good |
| Sample 2C | 30 | 3.52 | 0.12 | 55.2 | 6.4 | Good |
| Comp. sample 1A | 10 | 3.52 | 0.35 | 34.8 | 4.5 | Poor (Disconnected) |
| Comp. sample 1B | 20 | 5.75 | 0.29 | 35.2 | 7.8 | Poor (Di sconnect) |
| Comp. sample 1C | 30 | 7.52 | 0.25 | 34.7 | 11.5 | Poor (Disconnected) |
| Comp. sample 2A | 10 | 1.68 | 0.17 | 26.5 | 22.5 | Poor (Difficult to cut) |
| Comp. sample 2B | 20 | 3.25 | 0.16 | 25.4 | 25.7 | Poor (Difficult to cut) |
| Comp. sample 2C | 30 | 5.52 | 0.18 | 25.8 | 35.0 | Poor (Difficult to cut) |

**Claims**

1. A metal foil for current collectors, comprising:

   a first cut portion including a plurality of first cutting lines spaced apart from each other in a first direction; and a second cut portion including a plurality of second cutting lines spaced apart from each other in the first direction, wherein the first cut portion and the second cut portion are each provided in plural, and are alternately disposed parallelly while being spaced apart from each other in a second direction perpendicular to the first direction, the plurality of first cutting lines and the plurality of second cutting lines are spaced apart from each other in a zigzag arrangement such that end portions of respective cutting lines overlap each other to have an overlap portion, and
   the metal foil satisfies the following Relational Expressions 1 and 2:

   [Relational Expression 1]

   $$0.75 \leq \frac{D_1}{T_1} \leq 2.5$$

   [Relational Expression 2]

   $$1 \leq \frac{L_1}{T_1} \leq 6$$

   (wherein in the above expressions,

   $T_1$ is a thickness of the metal foil,
   $D_1$ is a distance between the first cut portion and the second cut portion adjacent to each other, and
   $L_1$ is a length of the overlap portion).

2. The metal foil for current collectors according to claim 1, wherein a ratio of a roughness Rz of a matte surface of the metal foil to a thickness $T_1$ of the metal foil is in a range from 0.1 to 0.5.

3. The metal foil for current collectors according to claim 2, wherein a metal foil in which the first cut portion and the second cut portion are not formed has a tensile strength in a range from 30 to 90 kgf/mm$^2$ and an elongation in a range from 2 to 25%.

4. The metal foil for current collectors according to claim 1, having a thickness in a range from 6 to 30 $\mu$m.

5. The metal foil for current collectors according to claim 1, wherein a metal of the metal foil is selected from: copper (Cu), aluminum (Al), nickel (Ni), iron (Fe), silver (Ag), gold (Au), tungsten (W), tin (Sn), platinum (Pt), palladium (Pd) and alloys thereof.

6. A current collector for batteries, comprising:

   a metal mesh layer formed by spreading and press-processing the metal foil according to any one of claims 1 to 5, and comprising a wire rod portion and a rhombic opening,
   wherein the wire rod portion satisfies the following Relational Expressions 3 and 4:

   [Relational Expression 3]

   $$0.75 \leq \frac{W_1}{T_1} \leq 2.5$$

[Relational Expression 4]

$$1 \le \frac{P_1}{T_1} \le 10$$

(in the above expressions,

$T_1$ is a thickness of the metal mesh layer,
$W_1$ is a line width of the wire rod portion,
$P_1$ is a line spacing of the wire rod portion).

7. The current collector for batteries according to claim 6, wherein an opening ratio is in a range from 10 to 300%.

8. The current collector for batteries according to claim 1, further comprising a surface treatment layer disposed on at least one surface of the metal mesh layer.

9. An electrode for secondary batteries, comprising:

   the current collector according to claim 6; and
   active material layers disposed on opposite surfaces of the current collector.

10. The electrode for secondary batteries according to claim 9, further comprising a surface treatment layer disposed on at least one surface of the metal mesh layer.

11. The electrode for secondary batteries according to claim 9, wherein the active material layer comprises a silicon-based active material.

12. A secondary battery comprising the electrode according to claim 9.

FIG. 1

FIG. 2

FIG. 3

## INTERNATIONAL SEARCH REPORT

International application No

PCT/IB2022/062617

**A. CLASSIFICATION OF SUBJECT MATTER**
INV. H01M4/38      C22F1/08      H01M4/66      H01M4/74
ADD. H01M10/0525   H01M4/02

According to International Patent Classification (IPC) or to both national classification and IPC

**B. FIELDS SEARCHED**

Minimum documentation searched  (classification system followed by classification symbols)
H01M  C22F

Documentation searched other than minimum documentation to the extent that such documents are included  in the fields searched

Electronic data base consulted during the  international search (name of data base and,  where practicable, search terms used)

EPO-Internal, WPI Data

**C. DOCUMENTS CONSIDERED TO BE RELEVANT**

| Category* | Citation of document, with indication,  where appropriate, of the relevant passages | Relevant to claim No. |
|---|---|---|
| X | KROSCHEL MATTHIAS ET AL:  "Analysis of oxygen evolving catalyst coated membranes with different current collectors using a new modified rotating disk electrode technique", ELECTROCHIMICA ACTA, ELSEVIER, AMSTERDAM, NL, vol. 317, 7 May 2019 (2019-05-07), pages 722-736, XP085744984, ISSN: 0013-4686, DOI: 10.1016/J.ELECTACTA.2019.05.011 [retrieved on 2019-05-07] | 1,6,7 |
| A | section 2.1 figure 1b table 2 | 2-5,8-12 |
| X | WO 2021/241195 A1 (PANASONIC IP MAN CO LTD [JP]) 2 December 2021 (2021-12-02) the whole document | 1-12 |

-/--

[X] Further documents are listed in the  continuation of Box C.        [X]   See patent family annex.

* Special categories of cited documents :

"A"  document defining the general state of the art which is not considered to be of particular relevance

"E"  earlier application or patent but published on or after the international filing date

"L"  document which may throw doubts on priority  claim(s) or which is cited to establish the publication date of another  citation or other special reason (as specified)

"O"  document referring to an oral disclosure, use,  exhibition or other means

"P"  document published prior to the international filing date but later than the priority date claimed

"T"  later document published after the international filing date or priority date and not in conflict with the application but cited to understand the principle or theory underlying the invention

"X"  document of particular relevance;; the claimed invention cannot be considered novel or cannot be considered to involve an inventive step when the document is taken alone

"Y"  document of particular relevance;; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 25 July 2023 | 02/08/2023 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Grave, Christian |

Form PCT/ISA/210 (second sheet) (April 2005)

# EP 4 641 681 A1

## INTERNATIONAL SEARCH REPORT

International application No

PCT/IB2022/062617

**C(Continuation).** DOCUMENTS CONSIDERED TO BE RELEVANT

| Category* | Citation of document, with indication, where appropriate, of the relevant passages | Relevant to claim No. |
|---|---|---|
| | -& US 2023/207835 A1 (NISHIMURA NAOAKI [JP] ET AL) 29 June 2023 (2023-06-29) paragraphs [0005], [0007], [0016], [0017], [0030], [0028], [0032], [0037], [0043], [0082] - [0087] tables 1,4 figure 1 ----- | |
| A | US 2020/014020 A1 (LEE SUN HYOUNG [KR] ET AL) 9 January 2020 (2020-01-09) paragraphs [0072], [0073] ----- | 1-12 |

Form PCT/ISA/210 (continuation of second sheet) (April 2005)

page 2 of 2

20

# EP 4 641 681 A1

## INTERNATIONAL SEARCH REPORT
### Information on patent family members

International application No

PCT/IB2022/062617

| Patent document cited in search report | | Publication date | Patent family member(s) | | Publication date |
|---|---|---|---|---|---|
| WO 2021241195 | A1 | 02-12-2021 | CN | 115668554 A | 31-01-2023 |
| | | | JP | WO2021241195 A1 | 02-12-2021 |
| | | | US | 2023207835 A1 | 29-06-2023 |
| | | | WO | 2021241195 A1 | 02-12-2021 |
| US 2023207835 | A1 | 29-06-2023 | CN | 115668554 A | 31-01-2023 |
| | | | JP | WO2021241195 A1 | 02-12-2021 |
| | | | US | 2023207835 A1 | 29-06-2023 |
| | | | WO | 2021241195 A1 | 02-12-2021 |
| US 2020014020 | A1 | 09-01-2020 | CN | 110785877 A | 11-02-2020 |
| | | | EP | 3621133 A1 | 11-03-2020 |
| | | | JP | 6849817 B2 | 31-03-2021 |
| | | | JP | 2020510976 A | 09-04-2020 |
| | | | KR | 20180114276 A | 18-10-2018 |
| | | | US | 2020014020 A1 | 09-01-2020 |
| | | | WO | 2018186555 A1 | 11-10-2018 |

Form PCT/ISA/210 (patent family annex) (April 2005)